# EUROPÄISCHE PATENTANMELDUNG

(11) **EP 1 128 261 A2**
(43) Veröffentlichungstag der Anmeldung: **29.08.2001**
(21) Anmeldenummer: 00128391.0
(22) Anmeldetag: 22.12.2000
(51) Int. Cl.: G06F 3/14

(54) **Anzeigeanordnung mit mindestens zwei Displaymodulen**

(30) Priorität: 24.02.2000 DE 10008498
(71) Anmelder: Mannesmann VDO AG, 60388 Frankfurt am Main (DE)
(72) Erfinder: Postl, Florian, 82515 Wolfratshausen (DE); Renner, Frank-Thomas, 35581 Wetzlar (DE)
(74) Vertreter: Richter, Jürgen

(57) **Zusammenfassung**

Es wird eine Anzeigeanordnung mit mindestens zwei unabhängig voneinander betreibaren Displaymodulen (3a, 3b) vorgeschlagen, die parallel von einem einzigen Videocontroller (10) angesteuert werden. Um dies zu ermöglichen ist vorgesehen, daß zumindest eines der beiden Displaymodule (3b) eine Zähleinrichtung zum Zählen der von dem Videocontroller ausgesendeten Zeilensynchronisationssignale (HSYNC) aufweist und diese Zähleinrichtung mit einem Spaltensynchronisationssignal (VSYNC) zurücksetzbar ist. Ist das erste Displaymodul (3a) zur Anzeige von m Zeilen und das zweite Displaymodul (3b) mit der Zähleinrichtung zur Anzeige von n Zeilen ausgebildet, so wird von dem Videocontroller (10) ein gemeinsames Bild mit m+n Zeilen sowie einigen Leerzeilen ausgegeben. Die Ausgabe von Bildinhaltssignalen auf dem zweiten Displaymodul (3b) erfolgt erst dann, wenn die Zähleinrichtung einen vorgegebenen Wert erreicht hat.

## Beschreibung

Die Erfindung betrifft eine Anzeigeanordnung mit mindestens zwei unabhängig voneinander betreibaren Displaymodulen, die parallel mit einem Videocontroller verbunden sind und von diesem mit Zeilensynchronisationssignalen (HSYNC), Spaltensynchronisationssignalen (VSYNC) und Bildinhaltsignalen angesteuert werden. Weiterhin betrifft die Erfindung ein Verfahren zum Betreiben einer Anzeigeanordnung mit mindestens zwei Displaymodulen mit einem gemeinsamen Videocontroller.

Beim Einsatz von zwei oder mehr Displaymodulen zur Darstellung verschiedener Bilder oder Informationen werden üblicherweise zwei Videocontroller verwendet, so daß jedes Displaymodul von einem eigenen Videocontroller angesteuert wird. Die Zahl der erforderlichen Videocontroller ist dabei gleich der Zahl der Displaymodule, wodurch eine solche Lösung einen hohen Bauteileaufwand mit entsprechend hohen Kosten aufweist. Alternativ dazu sind auch Lösungen bekannt, bei denen zwei Displaymodule von einem gemeinsamen Videocontroller angesteuert werden, der zwei Displayausgänge aufweist. Hierdurch wird zwar der Bauteileaufwand verringert, jedoch erweist sich auch hier der Kostenaspekt als nachteilig.

Aus der US 5,448,260 ist eine Anordnung bekannt, bei der eine Bildröhre und ein Flüssigkristallanzeigeelement (LCD) von einem gemeinsamen Controller angesteuert werden. Der Controller sendet neben Zeilen- und Spaltensynchronisationssignalen Datensignale an die Bildröhre und das LCD-Element. Aufgrund der unterschiedlichen Ansteueranforderungen der Bildröhre und des LCD wird dort ein Kontrollsystem vorgeschlagen, das eine parallele Ansteuerung der beiden Anzeigeelemente erlaubt.

Insbesondere in Kraftfahrzeugen werden vorwiegend Displaymodule eingesetzt, die eine flache Bauweise und ein geringes Gewicht aufweisen. Bildröhren sind für dieses Einsatzgebiet in der Regel wenig geeignet.

Aufgabe der Erfindung ist es, eine Anzeigeanordnung mit mindestens zwei unabhängig voneinander betreibaren Displaymodulen anzugeben, die parallel von einem einzigen Videocontroller angesteuert werden können und dennoch zur Darstellung unterschiedlicher Bildinhalte ausgelegt sind. Eine weitere Aufgabe der Erfindung ist es, ein Verfahren zum Betreiben einer Anzeigeanordnung mit mindestens zwei Displaymodulen mit einem gemeinsamen Videocontroller anzugeben.

Die erst genannte Aufgabe wird bei einer gattungsgemäßen Anzeigeanordnung dadurch gelöst, daß zumindest eines der beiden Displaymodule eine Zähleinrichtung zum Zählen der von dem Videocontroller ausgesendeten Zeilensynchronisationssignale (HSYNC) aufweist, die mit dem Spaltensynchronisationssignal (VSYNC) zurücksetzbar ist.

Hierdurch ist die Möglichkeit gegeben, einen einzigen Videocontroller zur Ansteuerung einzusetzen, der ein einziges Bild zur Verfügung stellt, das sowohl die Bildinhalte für das erste als auch für das zweite Displaymodul beinhaltet. Während das erste Displaymodul mit der ersten vom Videocontroller ausgegeben Zeile nach Aussendung von VSYNC mit dem Bildaufbau beginnt, kann durch die Zähleinrichtung des zweiten Displaymoduls bestimmt werden, ab welcher Zeile auch auf dem zweiten Displaymodul die Bilddarstellung erfolgen soll. Insbesondere ist dazu vorgesehen, daß das mit der Zähleinrichtung ausgestattete Displaymodul derart ausgestaltet ist, daß nur solche Bildsignale dargestellt werden, die nach einer vorgegebenen Zahl von HSYNC-Signalen empfangen werden. Durch diese Ausgestaltung der Erfindung können sowohl völlig verschiedene als auch zum Teil überlappende Bildinhalte auf den beiden Displaymodulen dargestellt werden. Die Festlegung erfolgt dabei durch die Wahl des Vorgabewertes für die Zähleinrichtung. Auf den beiden Displaymodulen können auch die gleichen Bildschirminhalte dargestellt werden, wenn der Vorgabewert auf eins gesetzt wird. Dies bedeutet, daß auch das zweite Displaymodul beginnend mit der ersten Zeile die Bildinformationen ausgibt. Es kann jedoch auch eine bestimmte Anzahl von Zeilen, die auf dem ersten Displaymodul dargestellt werden, bei dem zweiten Displaymodul ausgespart werden. Hierbei wird somit auf dem zweiten Displaymodul, das die Zähleinrichtung aufweist, eine Teilmenge des Bildinhaltes des ersten Displaymoduls dargestellt. Dies kann beispielsweise bei einem Multimediasystem eines Kraftfahrzeuges von Bedeutung sein, bei dem ein Displaymodul für den Fahrer und eines für den Beifahrer oder die Rücksitzpassagiere vorhanden ist, wobei der Fahrer aus Gründen der Fahrsicherheit nur eine eingeschränkte Bildschirminformation erhält.

In einer besonders bevorzugten Ausführungsform der Erfindung ist vorgesehen, daß das erste Displaymodul zur Anzeige von m Zeilen und das zweite mit der Zähleinrichtung versehene Displaymodul zur Anzeige von n Zeilen ausgebildet ist und die m Zeilen für das erste Display vor den n Zeilen für das zweite Display ausgegeben werden. Bei dieser Ausgestaltung der Erfindung werden die auf den beiden Displays auszugebenden Bildinhalte von dem Videocontroller nacheinander ausgegeben, wobei zunächst die m Zeilen für das erste Displaymodul ausgegeben und auf diesem dargestellt werden. In dem zweiten Displaymodul werden zunächst lediglich die HSYNC-Signale gezählt und die Ausgabe von Bildsignalen startet erst nachdem die m Zeilen für das erste Displaymodul bereits ausgegeben wurden. Die Zahl der auf dem zweiten Displaymodul auszugebenden Zeilen beträgt dabei n. Der Videocontroller ist insbesondere derart ausgelegt, daß er mehr als m + n Zeilen ausgeben kann, so daß eine gewisse Anzahl von Leerzeilen zwischen den m Zeilen für das erste Displaymodul und den n Zeilen für das zweite Displaymodul eingefügt werden kann.

Die Erfindung ist ohne weitere Maßnahmen dann anwendbar, wenn es sich bei den Displaymodulen um gleichartige Module mit gleicher Spaltenanzahl handelt, wobei TFT-Module bevorzugt werden.

In einer bevorzugten Ausgestaltung der Erfindung handelt es sich um Farbdisplaymodule, die von dem Videocontroller mit RGB-Signalen über eine an sich bekannte Standardschnittstelle versorgt werden. Die erfindungsgemäße Anzeigeanordnung ist besonders für Navigationssysteme in Kraftfahrzeugen geeignet, wenn bei diesen unterschiedliche Bildinhalte mit unterschiedlicher Relevanz für den Fahrer dargestellt werden sollen. Somit können die Displaymodule, die über einen gemeinsamen Videocontroller angesteuert werden, insbesondere räumlich getrennt voneinander im Fahrzeug angeordnet werden. Eines der Displaymodule, das besonders relevante Informationen wie Fahrtrichtungshinweise anzeigt, kann dazu im Armaturenbrett in direktem Blickfeld des Fahrers angeordnet werden, während ein zweites Displaymodul, das beispielsweise eine Landkartendarstellung zeigt, in der Mittelkonsole des Fahrzeugs angeordnet ist.

Die zweite Aufgabe der Erfindung wird gelöst durch ein Verfahren zum Betreiben einer Anzeigeanordnung mit mindestens zwei Displaymodulen mit einem gemeinsamen Videocontroller, der Zeilensynchronisationssignale, Spaltensynchronisationssignale und Bildinhaltssignale ausgibt, die über eine Schnittstelle beiden Displaymodulen gleichzeitig zugeleitet werden, wobei
- zunächst ein Spaltensynchronisationsimpuls (VSYNC) ausgegeben wird, der eine im zweiten Displaymodul vorhandene Zähleinrichtung zurücksetzt bzw. startet,
- m Zeilen mit dem Bildinhalt für das erste Displaymodul und vorzugsweise p Leerzeilen ausgegeben werden, wobei vor Ausgabe der Bildinhaltssignale jeder Zeile zunächst ein Zeilensynchronisationssignal (HSYNC) ausgegeben wird und die Anzahl der Zeilensynchronisationssignale (HSYNC) in der Zähleinrichtung des zweiten Displaymoduls gezählt wird und anschließend
- n Zeilen mit dem Bildinhalt für das zweite Displaymodul ausgegeben werden, wobei die Ausgabe der Bildinhaltssignale auf dem zweiten Displaymodul erst dann erfolgt nachdem die Zähleinrichtung m + p +1 Zeilensynchronisationssignale (HSYNC) gezählt hat, so daß die ersten m + p Zeilen von dem zweiten Displaymodul ignoriert werden.

Die Erfindung wird nachfolgend anhand eines Ausführungsbeispiels und der Zeichnung näher beschrieben.

Es zeigen:
- Figur 1: die von dem Videocontroller erzeugte Bildzusammensetzung,
- Figur 2: die Verbindung zwischen dem Videocontroller und den Displaymodulen,
- Figur 3: die wesentlichen Komponenten eines Kraftfahrzeugnavigationssystems,
- Figur 4: Bildschirmdarstellungen eines Kraftfahrzeugnavigationssystems mit zwei Displaymodulen.

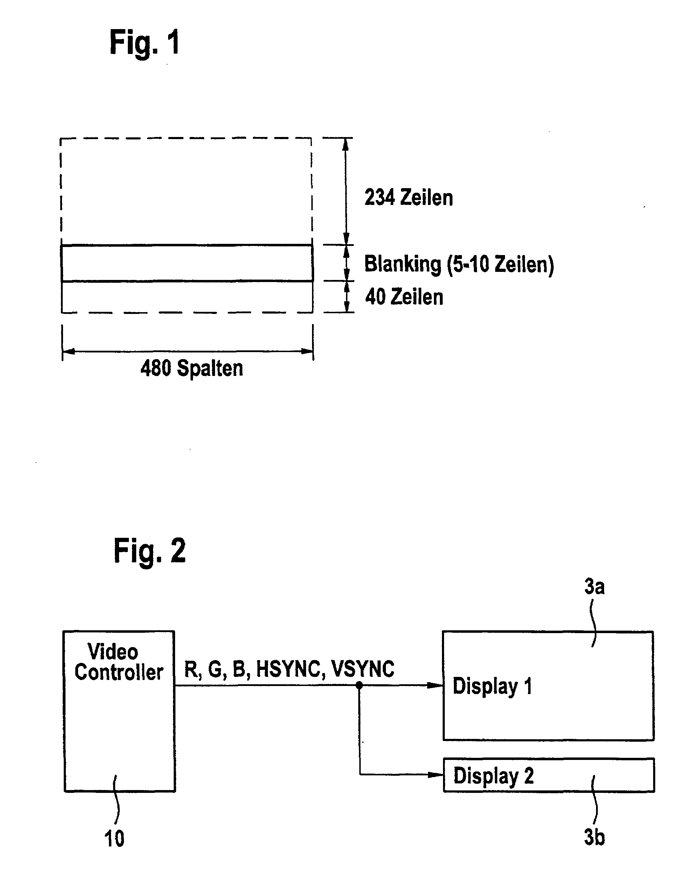

Figur 1 zeigt den Aufbau der von dem Videocontroller erzeugten Bildsignale. Dieser besteht im Ausführungsbeispiel aus 480 Spalten, sowie in einem ersten Bereich aus 234 Zeilen. Dieser erste Bereich mit 234 x 480 Pixel stellt das Bild für das erste Displaymodul dar. Anschließend folgen etwa 5 bis 10 Leerzeilen und daran anschließend weitere 40 Zeilen, die auf dem zweiten Displaymodul dargestellt werden sollen. Der Gesamtbereich von 284 x 480 Pixel wird von dem Videocontroller als ein Bildinhalt ausgegeben.

Figur 2 zeigt den Videocontroller 10 und die beiden Displays 3a und 3b, die in Parallelschaltung mit dem Videocontroller 10 verbunden sind. Der Videocontroller 10 gibt in bekannter Weise die Farbsignale R, G, B sowie die Synchronisationssignale HSYNC und VSYNC über eine Standardschnittstelle aus. Die vom Videocontroller 10 ausgegebenen Signale werden von beiden Displaymodulen 3a und 3b gleichzeitig empfangen. In die Displaymodule 3a, 3b sind die erforderlichen Treiberschaltungen integriert.

Das Displaymodul 3a beginnt unmittelbar nach dem Empfang des VSYNC-Signals mit dem Bildaufbau aufgrund der empfangenen RGB-Signale. Im Displaymodul 3b werden dagegen über eine Zähleinrichtung zunächst die 234 Zeilen, die für das Displaymodul 3a bestimmt sind, sowie die Leerzeilen durch Zählen der HSYNC-Signale ausgezählt. Erst danach werden die nachfolgenden Bildschirmzeilen auf dem Displaymodul 3b dargestellt. Die 234 Bildschirmzeilen für das Displaymodul 3a und die Leerzeilen werden somit von dem Displaymodul 3b ignoriert. Mit einem neuen VSYNC-Signal werden beide Displaymodule zurückgesetzt, d. h. das Displaymodul 3a beginnt nach Empfang eines VSYNC-Signals erneut mit dem Bildaufbau während im Displaymodul 3b nach Empfang des VSYNC-Signals die Zähleinrichtung zurückgesetzt wird und das zuvor beschriebene Verfahren erneut beginnt.

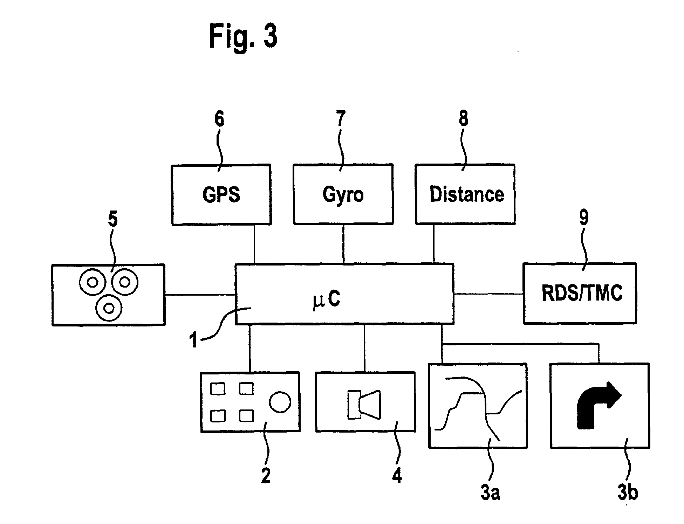

In Figur 3 sind die wesentlichen Komponenten eines Kraftfahrzeugnavigationssystems dargestellt, in dem die erfindungsgemäße Anzeigeanordnung besonders vorteilhaft eingesetzt werden kann. Wesentlicher Bestandteil des Navigationssystems ist die zentrale Steuer- und Recheneinheit 1, mit der eine Eingabeeinheit 2, eine optische Ausgabeeinheit 3 und eine akustische Ausgabeeinheit 4 verbunden sind. Über die Eingabeeinheit 2 kann bspw. ein Fahrtziel ausgewählt werden. Über die Ausgabeeinheiten 3, 4 werden Zielführungshinweise ausgegeben. Landkartendaten, die zur Berechnung einer Route zwischen dem gegenwärtigen Standort und dem gewünschten Zielort benötigt werden, sind auf einem Speicherelement, insbesondere einer CD-ROM, abgespeichert, das über ein Lesegerät 5 ausgelesen werden kann. Das Lesegerät 5 ist ebenfalls mit der Recheneinheit 1 verbunden. Zur Bestimmung der Fahrzeugposition weist das Navigationssystem eine Satellitenempfangseinheit 6 zum Empfang von Satellitennavigationssignalen sowie einen Richtungssensor 7 und einen Wegstreckensensor 8 auf. Auch diese Komponenten sind mit der Recheneinheit 1 verbunden. Mit Hilfe des Richtungssensors 7 und des Wegstreckensensors 8 ist sichergestellt, daß eine Positionsbestimmung auch dann durchgeführt werden kann, wenn die Satellitennavigationssignale nicht oder nicht in ausreichender Qualität zur Verfügung stehen. Weiterhin ist die Recheneinheit 1 mit einem Rundfunkempfänger 9 verbunden, über den aktuelle Verkehrsmeldungen an die Recheneinheit 1 zur Berücksichtigung bei der Wegführung übermittelt werden. Insoweit handelt es sich um ein an sich bekanntes Navigationssystem.

Bei dem in Figur 3 dargestellten Navigationssystem sind zwei optische Ausgabeeinheiten 3a und 3b vorhanden, auf denen unterschiedliche Informationsinhalte dargestellt werden. Auf dem Displaymodul 3a ist eine Landkarte dargestellt, die zur Orientierung des Fahrers insbesondere vor der Fahrt oder in Fahrtpausen dient. Diese Landkartendarstellung muß während der Fahrt für die Zielführung nicht ständig beobachtet werden, so daß das Displaymodul 3a an einer während der Fahrt vom Fahrer weniger gut einsehbaren Stelle im Kraftfahrzeug, bspw. in der Mittelkonsole, angeordnet werden kann. Auf dem zweiten Displaymodul 3b ist bspw. ein Fahrtrichtungshinweis in Form einer Pfeildarstellung wiedergegeben, wobei dieses Displaymodul 3b im Fahrzeug an einer besonders gut einsehbaren Stelle, insbesondere im Armaturenbrett, angeordnet ist. Durch die Verwendung der erfindungsgemäßen Anzeigeanordnung mit nur einem einzigen Videocontroller können sowohl die Kosten des Navigationssystems als auch der Platzbedarf reduziert werden. Der Videocontroller ist dabei Bestandteil der Steuer- und Recheneinheit 1. Die Aufbereitung der Bildinhalte erfolgt dabei in an sich bekannter Weise.

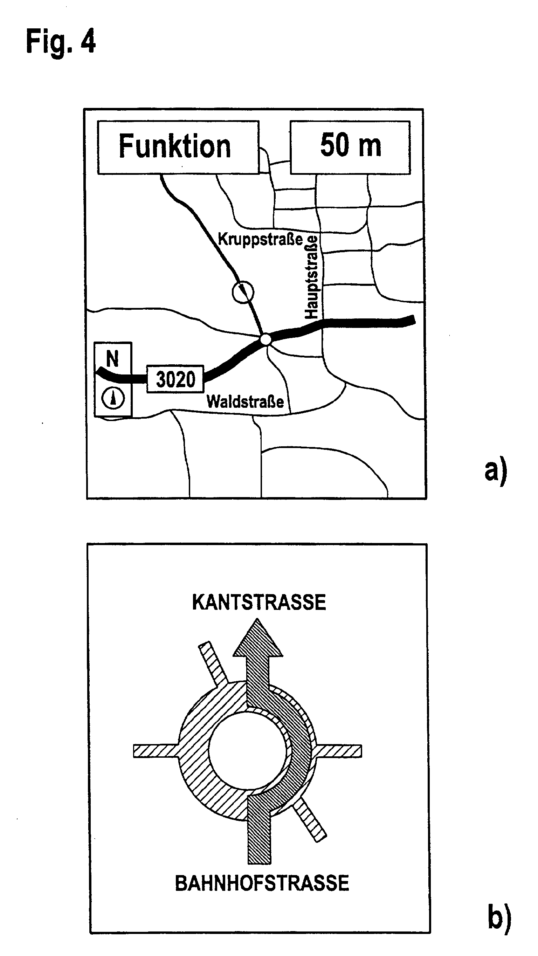

In Figur 4 sind beispielhaft zwei Displaydarstellungen gezeigt, wie sie in Kraftfahrzeugen auftreten, wobei hier beide Displaymodule nunmehr die gleiche Spalten- und Zeilenanzahl aufweisen. Figur 4a zeigt eine Landkartendarstellung, die sowohl die Fahrzeugposition, die Kartenausrichtung sowie auch Straßennamen enthält. Eine solche Darstellung dient dem Fahrer im wesentlichen zur Orientierung wie er es von gedruckten Landkarten her gewohnt ist. Figur 4b zeigt demgegenüber die Darstellung eines Zielführungshinweises auf einem separatem Displaymodul, wobei in diesem Fall der nächste Verzweigungspunkt in Form eines Kreisverkehrs mit den abgehenden Straßen und der vom Fahrer einzuhaltenden Fahrtrichtung dargestellt ist. Mit der erfindungsgemäßen Anzeigeanordnung können die in Figur 4a und 4b dargestellten Anzeigen auf einfache Weise auf unterschiedlichen Displaymodulen dargestellt werden.

## Patentansprüche

1. Anzeigeanordnung mit mindestens zwei unabhängig voneinander betreibbaren Displaymodulen, die parallel mit einem Videocontroller verbunden sind und von diesem mit Zeilensynchronisationssignalen (HSYNC), Spaltensynchronisationssignalen (VSYNC) und Bildinhaltssignalen angesteuert werden, dadurch gekennzeichnet, daß zumindest eines der beiden Displaymodule (3a, 3b) eine Zähleinrichtung zum Zählen der von dem Videocontroller (10) ausgesendeten Zeilensynchronisationssignale (HSYNC) aufweist, die mit dem Spaltensynchronisationssignal zurücksetzbar ist.

2. Anzeigeanordnung nach Anspruch 1, dadurch gekennzeichnet, daß das mit der Zähleinrichtung ausgestattete Displaymodul (3b) derart ausgestaltet ist, daß nur solche Bildsignale dargestellt werden, die nach einer vorgegebenen Anzahl von Zeilensynchronisationssignalen empfangen werden.

3. Anzeigeanordnung nach einem der vorhergehenden Ansprüche, dadurch gekennzeichnet, daß
- das erste Displaymodul (3a) zur Anzeige von m Zeilen und
- das mit der Zähleinrichtung versehene zweite Displaymodul (3b) zur Anzeige von n Zeilen ausgebildet ist und weiterhin
- die m Zeilen für das erste Display (3a) vor den n Zeilen für das zweite Display (3b) ausgegeben werden .

4. Anzeigeanordnung nach Anspruch 3, dadurch gekennzeichnet, daß von dem Videocontroller (10) z Zeilen ausgebbar sind, wobei z = m + n + p und p die Anzahl von Leerzeilen ist, die zwischen den m Zeilen für das erste Displaymodul (3a) und den n Zeilen für das zweite Displaymodul (3b) eingefügt sind.

5. Anzeigeanordnung nach einem der vorhergehenden Ansprüche, dadurch gekennzeichnet, daß es sich um gleichartige Displaymodule (3a, 3b) mit gleicher Spaltenanzahl, insbesondere TFT-Module, handelt.

6. Anzeigeanordnung nach einem der vorhergehenden Ansprüche, dadurch gekennzeichnet, daß es sich um Farbdisplaymodule handelt und von dem Videocontroller (10) als Bildinhaltssignale RGB-Signale ausgesendet werden.

7. Anzeigeanordnung nach einem der vorhergehenden Ansprüche, dadurch gekennzeichnet, daß sie in einem Navigations- oder Multimediasystem für Kraftfahrzeuge eingesetzt ist.

8. Anzeigeanordnung nach Anspruch 7, dadurch gekennzeichnet, daß die Displaymodule räumlich getrennt voneinander im Fahrzeug angeordnet sind.

9. Anzeigeanordnung nach Anspruch 7 oder 8, dadurch gekennzeichnet, daß auf einem der Displaymodule eine Landkarte und auf dem anderen Displaymodul ein Zielführungshinweis darstellbar ist.

10. Verfahren zum Betreiben einer Anzeigeanordnung mit mindestens zwei Displaymodulen (3a, 3b) mit einem gemeinsamen Videocontroller (10), der Zeilensynchronisationssignale, Spaltensynchronisationssignale und Bildinhaltssignale ausgibt, die über eine Schnittstelle beiden Displaymodulen (3a, 3b) gleichzeitig zugeleitet werden, wobei
- zunächst ein Spaltensynchronisationsimpuls (VSYNC) ausgegeben wird, der eine im zweiten Displaymodul (3b) vorhandene Zähleinrichtung zurücksetzt bzw. startet,
- m Zeilen mit dem Bildinhalt für das erste Displaymodul (3a) und vorzugsweise p Leerzeilen ausgegeben werden, wobei vor Ausgabe der Bildinhaltssignale jeder Zeile zunächst ein Zeilensynchronisationssignal (HSYNC) ausgegeben wird und die Anzahl der Zeilensynchronisationssignale (HSYNC) in der Zähleinrichtung des zweiten Displaymoduls (3b) gezählt wird und anschließend
- n Zeilen mit dem Bildinhalt für das zweite Displaymodul (3b) ausgegeben werden, wobei die Ausgabe der Bildinhaltssignale auf dem zweiten Displaymodul (3b) erst dann erfolgt nachdem die Zähleinrichtung m+p+1 Zeilensynchronisationssignale (HSYNC) gezählt hat, so daß die ersten m+p Zeilen von dem zweiten Displaymodul (3b) ignoriert werden.

11. Verfahren nach Anspruch 10, dadurch gekennzeichnet, daß von dem Videocontroller (10) als Bildinhaltssignale RGB-Signale ausgesendet werden.
